# EUROPÄISCHE PATENTANMELDUNG

(11) **EP 4 467 939 A1**
(43) Veröffentlichungstag der Anmeldung: **27.11.2024**
(21) Anmeldenummer: 23175185.0
(22) Anmeldetag: 24.05.2023
(51) Int. Cl.: G01G 19/393

(54) **BEHÄLTER UND BEHÄLTERZARGE**

(71) Anmelder: Multipond Wägetechnik GmbH, 84478 Waldkraiburg (DE)
(72) Erfinder: PETERS, Andreas, 84544 Aschau am Inn (DE); SCHICK, Julian, 84539 Zangberg (DE)
(74) Vertreter: Prüfer & Partner mbB Patentanwälte · Rechtsanwälte

(57) **Zusammenfassung**

Die vorliegende Erfindung bezieht sich auf Behälter (B), insbesondere verwendet als Vorrats- oder Wägebehälter für Kombinationswaagen (K).

Ein erfindungsgemäßer Behälter (B) umfasst eine Zarge (1),
wobei die Zarge (1) aus einem metallischen Werkstoff gefertigt ist,
und wobei die Zarge (1) keine Schweißnähte aufweist.

Durch Verwendung eines Gussverfahrens ist eine kostengünstige Herstellung, aber trotzdem hygienegerechte Gestaltung möglich.

## Beschreibung

Die vorliegende Erfindung befasst sich mit einem Behälter, insbesondere für eine Waage, beispielsweise eine Kombinationswaage. Insbesondere steht die Zarge dieses Behälters im Fokus, welche aus Metall, aber ohne Verwendung von Schweißnähten ausgestaltet ist.

Im Stand der Technik ist aus dem Dokument EP 1 166 057 B1 eine Kombinationswaage bekannt. Hier werden Produkte aus einer Verteilvorrichtung durch Zuführen gefördert, bevor diese in entsprechende Vorratsbehälter bzw. dann in entsprechende Wägebehälter fallen. Anschließend werden Produkte von einer Sammeleinrichtung aufgefangen. Wichtig für entsprechende Vorrats - bzw. Wägebehälter sind insbesondere die Zargen, also die Grundkörper der entsprechenden Vorrats- oder Wägebehälter, da diese die zu wiegenden Produkte auffangen und - wenn als Wägebehälter verwendet wird - in diesen auch der Wägevorgang durchgeführt wird.

Im Stand der Technik sind beispielsweise Zargen aus geschweißtem Blech bekannt - es muss allerdings bei Waagen für Lebensmittel eine hygienegerechte Ausgestaltung vorhanden sein, aus diesem Grund muss für das Formen der Behälter ein Blech mit glatter Oberfläche verwendet werden, welches geschweißt werden muss, beispielsweise durch ein Laserschweißverfahren.

Dies bedeutet einen sehr hohen Rüst- und Justieraufwand und der Laserstrahl, welcher den Schweißvorgang vornimmt, muss sehr dünn sein. Trotzdem muss spaltfrei gearbeitet werden können, d.h. es dürfen keine Spalten entstehen, in welchen sich Schmutz, Reinigungsmittel oder Ähnliches anlagern könnten.

Eine hygienische Ausgestaltung ist so aufgrund der fertigungstechnischen Einschränkungen nur mit sehr hohem Aufwand möglich.

Ferner kann beim Schweißen ein Wärmeverzug auftreten, welcher das gesamte Bauteil verziehen könnte. Auch ist immer ein gewisses Risiko für geöffnete Schweißnähte vorhanden, wodurch Hohlräume entstehen. In diesen können sich Mikrooranismen und Reinigungsmittelreste festsetzten und beim Austritt eine Kontamination verursachen. Bei dem verwendeten Schweißverfahren muss zudem ein sehr beweglicher Laserkopf verwendet werden, um an alle Stellen zu gelangen, da bei einem Behälter rundum alles dicht geschweißt werden muss. Dies verursacht sehr hohe Kosten.

Da an den Zargen noch weitere Bauteile angeschweißt werden müssen (Aufhängung des Behälters, Aufhängung der Klappen usw.), sind an einer entsprechenden Zarge außerdem zusätzliche Schweißnähte vorhanden.

Ferner existieren Behälter und Behälterzargen aus Kunststoff, diese sind allerdings nicht für sämtliche Anwendungen verwendbar.

Es ist daher eine Aufgabe der vorliegenden Erfindung, metallische Zargen für einen Behälter bereitzustellen, durch welche die oben genannten Nachteile überwunden werden, und die kostengünstig zu produzieren sind.

Diese Aufgabe wird gelöst durch einen Behälter gemäß Anspruch 1 sowie eine Kombinationswaage gemäß Anspruch 12 sowie ein Verfahren gemäß Anspruch 14. Weitere vorteilhafte Ausgestaltungen der vorliegenden Erfindung sind Gegenstand der Unteransprüche.

Der erfindungsgemäße Behälter weist eine Zarge auf, welche aus einem metallischen Werkstoff gefertigt ist. Ferner weist die Zarge keinerlei Schweißnähte auf. Allein dadurch können sämtliche oben genannten Nachteile überwunden werden, da nicht geschweißt werden muss. Zudem ist ein solches Herstellungsverfahren deutlich kostengünstiger. Ein solcher Behälter dient beispielsweise als Vorrats- oder Wägebehälter einer Waage, insbesondere Kom binationswaage.

Vorzugsweise ist die Zarge aus einem duktilen metallischen Werkstoff gefertigt, weiter vorzugsweise aus Edelstahl. Dies erlaubt hygienegerecht gestaltete Oberflächen und eine hohe Stabilität.

Vorzugsweise ist die Zarge durch ein urformendes Verfahren, weiter vorzugsweise Gussverfahren, noch weiter vorzugsweise Feingussverfahren hergestellt. Bei einem solchen Verfahren, insbesondere Feingussverfahren, können sämtliche Teile der Zarge und der dazugehörigen weiteren Bauteile durch Gussmaterial hergestellt werden, es entsteht so kein Nachteil, dass einige Teile an die Zarge angeschweißt werden müssen, wodurch Abstriche bei der hygienegerechten Gestaltung gemacht werden müssten.

Weiter vorzugsweise weist die Zarge einen schachtförmigen Abschnitt. Ein schachtförmiger Abschnitt umschließt einen Raum. Er kann beispielsweise einen rechteckigen, runden oder ovalen Querschnitt aufweisen. Beispielsweise kann sich der Querschnitt über die Höhe verändern.

Vorzugsweise ist ferner ein an die Klappenform angepasster Abschnitt vorgesehen, welcher an den schachtförmigen Abschnitt angesetzt ist. An diesen liegen die Klappen an, und verschließen den Behälter somit.
Beispielsweise ist hier mindestens ein schräg zulaufender Abschnitt vorgesehen, welcher an den schachtförmigen Abschnitt angesetzt ist. In einer Ausführungsform sind zwei schräg zulaufende Abschnitte vorgesehen.

Weiter vorzugsweise ist die Zarge einstückig ausgebildet.

Die Wanddicke der Zarge liegt vorzugsweise in einem Bereich zwischen 0,3 und 5 mm, vorzugswese zwischen 1 und 2,5 mm. Gerade bei solchen Wanddicken ist es vorteilhaft, ohne Schweißnähte auszukommen, da gerade dann, wenn an die Zarge weitere Teile angesetzt bzw. angeschweißt werden sollen, es hier zu Beschädigungen und zu Hohlräumen kommen könnte.

Der Mittenrauwert der Zargenoberfläche beträgt vorzugsweise höchstens 0,8 µm. Dies erlaubt eine hygienegerechte Gestaltung.

Weiter vorzugsweise ist in dem Innenbereich der Zarge eine Oberflächenstrukturierung vorgesehen. Weiter vorzugsweise ist die Oberflächenstrukturierung rautenförmig.

Eine solche Oberflächenstrukturierung kann dazu führen, dass Produkte, wie beispielsweise Gummibärchen, Schokoladenbonbons oder ähnliches schlechter an der Zarge anhaften, weswegen während eines Wägeprozesses alle Produkte aus dem entsprechenden Behälter herausgeschüttet werden können, ohne dass Produkte am Behälter anhaften, und somit Wägeergebnisse nicht verfälscht werden können. Eine solche Oberflächenstrukturierung ist allerdings nur in der Innenseite der Zarge sinnvoll, da nur die Innenseite der Zarge direkt in Kontakt mit Produkten ist.

Das Gussverfahren erlaubt es hier, die Oberflächenstrukturierung nur teilweise vorzusehen, d.h. dass nur die Innenseite der Zarge mit einer Oberflächenstrukturierung versehen werden kann, nicht aber die Außenseite. Die Oberflächenstrukturierung kann während des Gusses, also bereits während dem urformenden Prozess, hergestellt werden.

Weiter vorzugsweise ist auf der Außenseite der Zarge mindestens eine Klappenbefestigungsvorrichtung vorgesehen. An diese kann eine entsprechende Behälterklappe angebracht werden.
Damit eine bessere Stabilität vorhanden ist, sind vorzugsweise zwei Klappenbefestigungsvorrichtungen pro Behälterklappe vorgesehen.
Wenn zwei Klappen vorhanden sind, sind beispielsweise vier Klappenbefestigungsvorrichtungen an der Außenseite der Zarge vorgesehen. Die Klappenbefestigungsvorrichtung weisen einen von der Zarge vorstehenden Abschnitt auf, und vorzugsweise weist dieser jeweils eine Schnittstelle (hier: Bohrung) auf, in welche die Befestigung der Klappen aufgenommen werden kann.

Ein entsprechender Behälter ohne Schweißnähte, welcher also durch Guss (vorzugsweise Feinguss) hergestellt ist, hat den Vorteil, dass die Klappenbefestigungsvorrichtung(en) nicht extra angeschweißt werden muss / müssen, sondern gleich miteingegossen werden können. Sie sind also integral mit der Zarge per se ausgebildet.

Weiter vorzugsweise ist / sind die Klappenbefestigungsvorrichtung(en) am Übergang des schachtförmigen Abschnitts zu dem an die Klappenform angepasster Abschnitt vorgesehen.

Weiter vorzugsweise weist die Zarge mindestens eine Aufhängevorrichtung auf. Weiter vorzugsweise weist sie mindestens zwei Aufhängevorrichtungen auf, und weiter vorzugsweise weisen die Aufhängevorrichtungen jeweils eine Lagerstelle (beispielsweise Bohrung) auf. Noch weiter vorzugsweise weist mindestens eine Aufhängevorrichtung einen zylinderförmigen Abschnitt auf, mit welchem die Zarge an einer entsprechenden Haltevorrichtung aufgehängt werden kann.
Auch kann eine Rückstellfeder gegen diesen zylinderförmigen Abschnitt gespannt werden.
Auch die Aufhängevorrichtung ist also ein Bauteil, das bei einem herkömmlichen Prozess an die Zarge angeschweißt werden muss - bei einer schweißnahtfreien Zarge entfällt dies allerdings, und die Aufhängevorrichtungen (mit ihren teils filigranen Strukturen) sind integral mit der Zarge ausgebildet.

Weiter vorzugsweise weisen die Übergänge zwischen der Außenseite der Zarge und der Klappenbefestigungsvorrichtung und/oder einer Aufhängevorrichtung einen Radius von mindestens 6,5 mm auf. Dies ist vorteilhaft, um eine hygienegerechte Gestaltung entsprechend ausführen zu können.

Wenn eine solche Aufhängevorrichtung oder eine Klappenbefestigungsvorrichtung an die Zarge angeschweißt werden müsste, müsste hier viel Material beim Schweißvorgang in die Naht eingebracht werden, dies stellt allerdings ein Problem dar, da in das Blech der Zarge so sehr leicht Löcher gebrannt werden könnten. Lagerstellen und Ösen müssen also nun weder geschweißt noch geschraubt werden, und beim Guss ist auch das Realisieren filigraner Bauteile bzw. Komponenten komplett unproblematisch.

Weiter vorzugsweise weist ein Behälter auf: mindestens eine Klappe, die dazu angepasst ist, die untere Öffnung des Behälters zu verschließen, wobei die Klappe an mindestens einer, vorzugsweise zwei Klappenbefestigungsvorrichtung(en) schwenkbar gelagert ist. Die mindestens eine Klappe ist mit einer Klappenbetätigungsmechanik mit einer Drehwelle verbunden ist, wobei die Drehwelle in der / den Lagerstelle(n) der Aufhängevorrichtung gelagert ist. So kann ein Schließmechanismus für den Behälter realisiert werden. Vorzugsweise sind zwei Klappen vorgesehen, diese sind dann mit einem Verbindungselement miteinander verbunden.

Weiter vorzugsweise liegt / liegen die Klappe(n) an dem Teil / den Teilen des an die Klappenform angepasster Abschnitts, beispielsweise schräg zulaufenden Abschnitts an. So kann der Behälter gut verschlossen werden.

Weiter vorzugsweise wird die Bewegung der Klappenbetätigungsmechanik-nach oben durch einen Begrenzungsabschnitt begrenzt, welcher ebenfalls integral mit der Zarge ausgebildet ist. Auch dieser Begrenzungsabschnitt muss also nicht angeschweißt werden, sondern kann durch Guss urformend ausgebildet werden.

Weiter vorzugsweise weist die Zarge in dem Bereich, in dem die Aufhängevorrichtungen vorgesehen sind, eine größere Wanddicke auf, als in anderen Bereichen. Dies trägt zu einer momentkonformen Konstruktion bei, da in dem Bereich, an dem die auf die Zarge aufgebrachten Momente am größten sind (also an der Schnittstelle zur Aufhängevorrichtung) am meisten Material vorhanden ist und die Festigkeit somit am größten ist. Auch kann die Steifigkeit beim Handling verbessert werden, was wichtig ist, wenn beispielsweise beim Reinigen die Behälter entnommen werden und hierbei herunterfallen. Hier besteht also weniger Gefahr, dass Zargen und daran angebrachte Bauteile beim Herunterfallen beschädigt wird könnten.

Eine erfindungsgemäße Kombinationswaage weist auf:
mehrere Wägebehälter und optional Vorratsbehälter, die wie oben beschrieben ausgebildet sind;
sowie eine Sammeleinrichtung, die dazu angepasst ist, Produkte aus den Wägebehältern zusammenzuführen,
wobei die Wägebehälter dazu angepasst sind, ein Gewichtssignal über die Zeit aufzunehmen.

Vorzugsweise ist die Kombinationswaage ferner mit einem Verteilteller sowie mehreren Dosierrinnen, welche jeweils mit einem Antrieb versehen sind, vorgesehen. Diese Komponenten sind oberhalb der Wägebehälter angeordnet.

Die Verwendung von erfindungsgemäßen Behältern hat den weiteren Vorteil, dass das Einschwingverhalten verbessert werden kann.
Dadurch, dass die Zarge einstückig ausgebildet ist, ist die Eigenfrequenz der Zarge deutlich höher (verglichen mit einer geschweißten Zarge). Eine dynamische Werterfassung eines Wägesignals ist dann schneller und genauer, wenn der Messwertgeber keine niedrigen Eigenfrequenzen aufweist. Dies hat auch deutliche Vorteile bei der Filterung von Wägesignalen. Die erfindungsgemäße Zarge trägt somit weniger zum Schwingen auf tiefen Frequenzen beim Gesamtsystem bei. Ferner bringt der Aufprallimpuls von Produkt das ganze System in der Regel zum Schwingen. Bei höheren (Eigen-) Frequenzen kommt eine solche Schwingung schneller zum Erliegen, da die Schwingungsenergie bei höheren Eigenfrequenzen schneller aufgebraucht wird. Somit können Schwingungen schneller gedämpft werden und die negativen Auswirkungen des Aufprallimpulses auf die Werterfassung schneller abklingen.
Behälterzargen ohne Schweißnähte haben also auch während dem Wägevorgang deutliche Vorteile.

Ein erfindungsgemäßes Verfahren zum Herstellen einer Zarge eines Behälters umfasst die folgenden Schritte:
a) Bereitstellen einer äußeren Gussform, welche die äußere Oberfläche der Zarge abbildet;
b) Bereitstellen eines Gusskerns, welcher dazu angepasst ist, die innere Oberfläche der Zarge abzubilden;
c) Anordnen des Gusskerns in der äußeren Gussform;
d) Füllen der äußeren Gussform mit Material (also flüssigem Metall).

So kann eine Behälterzarge leicht und kostengünstig urformend hergestellt werden.

Weiter vorzugsweise ist, am Gusskern zumindest teilweise eine Oberflächenstruktur vorgesehen

Insbesondere kann so sichergestellt werden, dass die Innenseite der Zarge eine andere Oberflächenstruktur aufweist als die Außenseite der Zarge. Durch Austauschen des Gusskerns ist sehr leicht eine andere Oberflächenstruktur an der Innenseite der Zarge realisierbar, ohne dass hier ein Fertigungsprozess kompliziert umgestaltet werden müsste.

Im Folgenden werden Ausführungsbeispiele der vorliegenden Erfindung durch die beiliegenden Figuren näher beschrieben.
Fig. 1 zeigt eine isometrische Ansicht einer ersten Ausführungsform einer erfindungsgemäßen Zarge.
Fig. 2 zeigt eine Seitenansicht einer erfindungsgemäßen Zarge gemäß der ersten Ausführungsform.
Fig. 3 zeigt eine isometrische Ansicht einer erfindungsgemäßen Zarge gemäß der ersten Ausführungsform mit bestimmter Oberflächenstruktur.
Fig. 4 zeigt eine ähnliche Ansicht wie Fig. 3, nur mit anderer Oberflächenstruktur.
Fig. 5 zeigt eine Rückansicht einer erfindungsgemäßen Zarge gemäß der ersten Ausführungsform.
Fig. 6 zeigt einen kompletten Behälter gemäß der ersten Ausführungsform.
Fig. 7 zeigt ein Detail der entsprechenden Aufhängevorrichtung.
Fig. 8 zeigt ein Detail einer Klappenbefestigungsvorrichtung.
Fig. 9 zeigt die Anbringung einer Klappenbefestigungsvorrichtung, einer Aufhängevorrichtung, sowie eines Begrenzungsabschnitts.
Fig. 10 zeigt eine Gesamtansicht einer Kombinationswaage.
Fig. 11 zeigt eine isometrische Ansicht einer zweiten Ausführungsform einer erfindungsgemäßen Zarge.

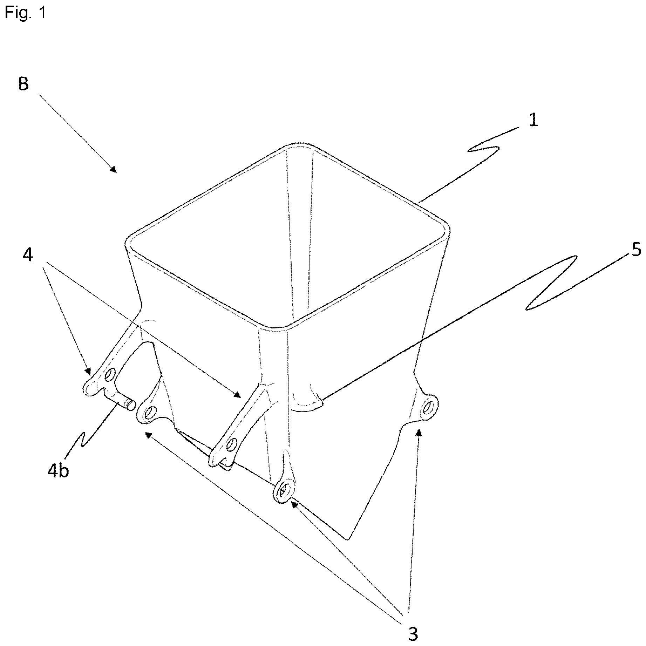

In Fig. 1 ist eine Zarge 1 eines Behälters B gemäß der ersten Ausführungsform gezeigt. Die Behälterzarge ist aus Feinguss ausgestaltet. An der Außenseite der Zarge 1 sind auf beiden Seiten Klappenbefestigungsvorrichtungen 3 vorgesehen, an welchen Klappen (hier nicht gezeigt) angebracht werden können. Ferner sind an einer Seite der Zarge zwei Aufhängevorrichtungen 4 vorgesehen. Eine Aufhängevorrichtung 4 weist einen zylindrischen Abschnitt 4b auf (an welchem beispielsweise ein Rückstellfeder - hier nicht gezeigt - befestigt werden kann).

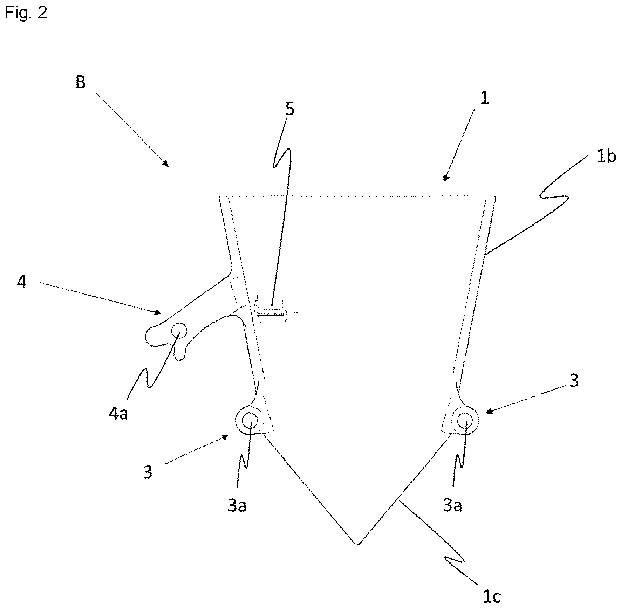

Fig. 2 zeigt eine Ansicht einer Zarge 1 eines Behälters B von der Seite. Hier ist ein oberer Teil (schachtförmiger Abschnitt 1b) der Zarge 1 quadratisch bzw. würfelförmig, ein unterer Teil (an Klappenform angepasster Abschnitt 1c) ist prismaförmig mit zwei spitz zulaufenden Teilen geformt. Auch hier sind wiederum die Klappenbefestigungsvorrichtungen 3 zu sehen, in denen jeweils eine Schnittstelle (hier: Bohrung) 3a vorgesehen ist. Ferner ist hier eine weitere Aufhängevorrichtung 4 vorgesehen, auch hier ist eine Lagerstelle (hier: Bohrung) 4a vorgesehen. Auch sieht man, dass integral mit der Zarge 1 ein Begrenzungsabschnitt 5 ausgebildet ist.

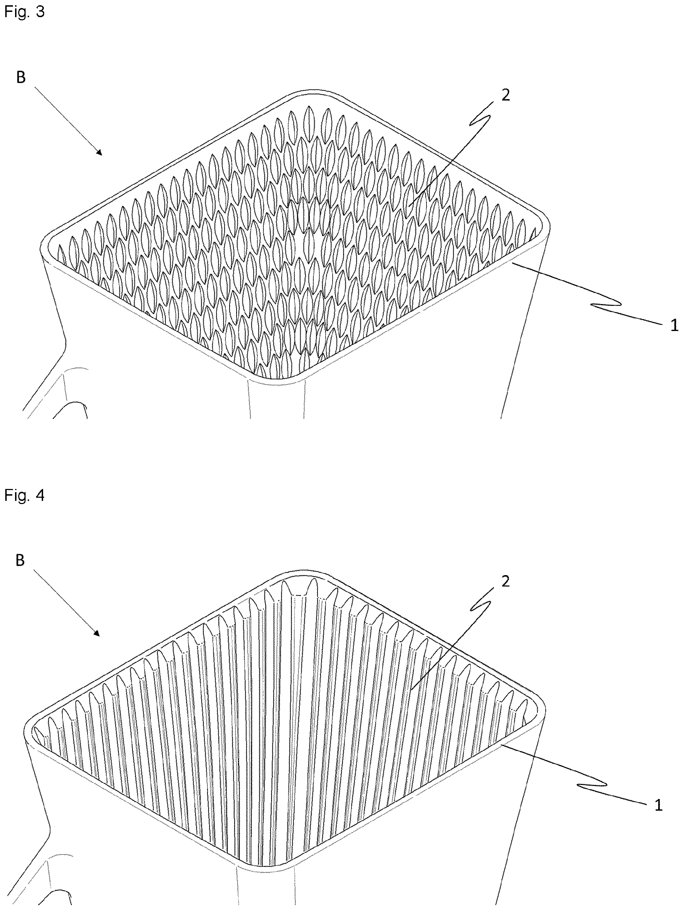

In Fig. 3 ist die Innenseite der Zarge 1 eines Behälters B zu sehen, hier mit einer rautenförmigen Oberflächenstrukturierung 2 auf der Innenseite.

In Fig. 4 ist als alternative Ausführungsform zu der in Fig. 3 gezeigten Ausgestaltung eine senkrecht gerippte Oberflächenstrukturierung 2 an der Innenseite der Zarge 1 vorgesehen.

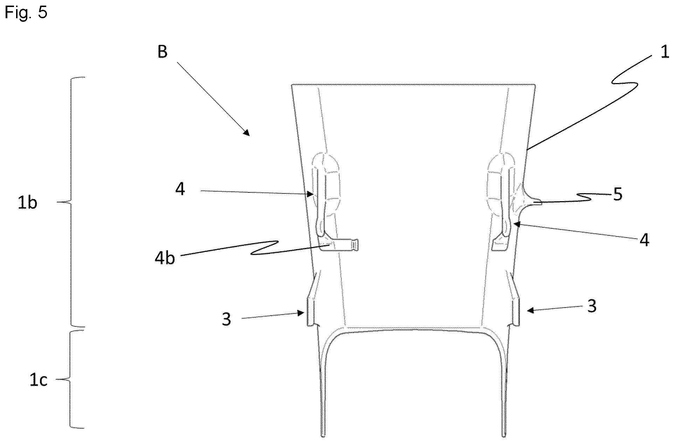

Fig. 5 zeigt eine Rückansicht auf eine erfindungsgemäße Zarge 1. Hier ist gezeigt, dass weiter oben ein schachtförmiger Abschnitt 1b vorhanden ist, und weiter unten zwei spitzwinklige Abschnitte 1c angesetzt sind. Wiederum sind die Klappenbefestigungsvorrichtungen 3 und die Aufhängevorrichtung 4 gezeigt, ferner ein Begrenzungsabschnitt 5. An der Aufhängevorrichtung 4 ist ein zylindrischer Abschnitt 4b angesetzt.

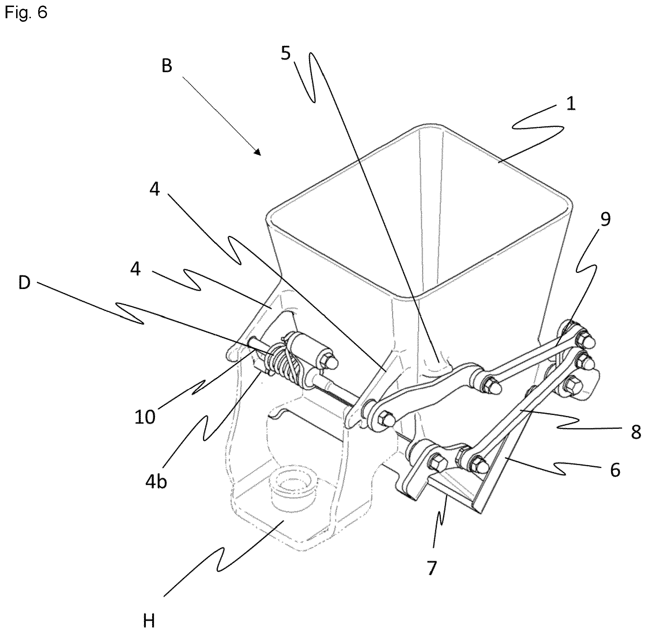

Fig. 6 zeigt einen kompletten Behälter B. Die Zarge 1 ist wie oben beschrieben ausgeführt. Ferner sind jeweils eine erste Klappe 6 und eine zweite Klappe 7 vorgesehen, welche den Auslass des Behälters B nach unten begrenzt. Die beiden Klappen 6 und 7 sind mit einem Verbindungselement 8 verbunden, die zweite Klappe 7 ist zudem mit einer Klappenbetätigungsmechanik 9 verbunden, welches diese mit einer Drehwelle 10 verbindet. Die Drehwelle 10 ist in einem Paar von Aufhängevorrichtungen 4 gelagert. Ferner ist eine Haltevorrichtung H gezeigt.
Durch die Bewegung der Drehwelle 10 können die beiden Klappen 6 und 7 geöffnet und geschlossen werden. Am zylindrischen Abschnitt 4b ist eine Feder D vorgespannt, welche als Rückstellfeder dient. Diese ist dazu angepasst, die Drehwelle 10 zu drehen.

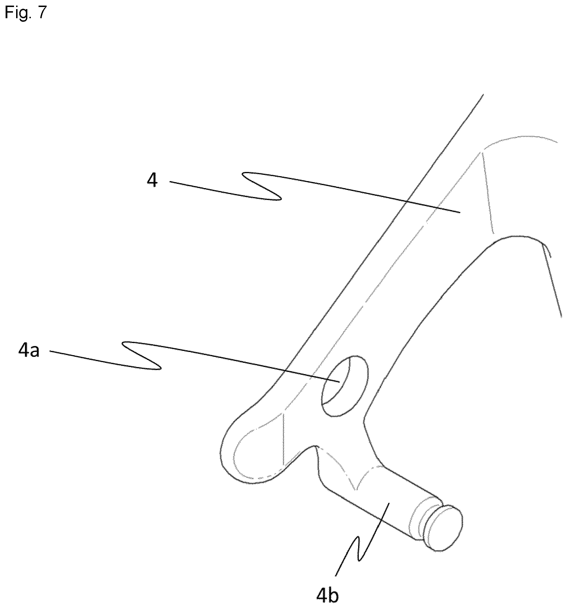

Fig. 7 zeigt eine Detailansicht einer Aufhängevorrichtung 4. Diese weist eine Lagerstelle (Bohrung) 4a sowie einen filigranen zylindrischen Abschnitt 4b auf, welcher mehrere Stufen aufweist.

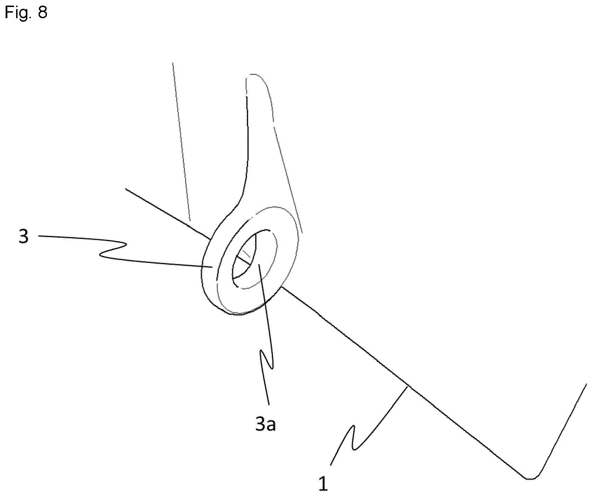

Fig. 8 zeigt eine Detailansicht einer Befestigungsvorrichtung 3 mit einer Schnittstelle (hier: Bohrung) 3a, welche mit der Zarge 1 integral vorgesehen ist.

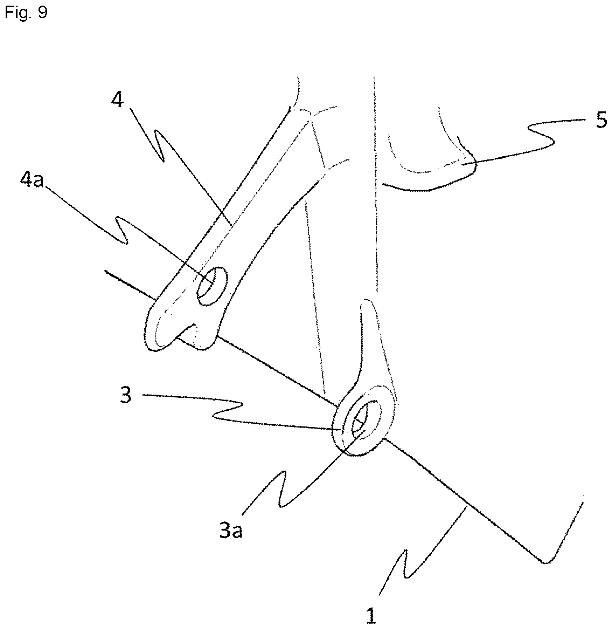

Fig. 9 zeigt eine Detailansicht einer Befestigungsvorrichtung 3 mit Schnittstelle (hier: Bohrung) 3a, einer Aufhängevorrichtung 4 mit Lagerstelle (Bohrung) Loch 4a, sowie einen Begrenzungsabschnitt 5. Der Begrenzungsabschnitt 5 begrenzt die Bewegung der Klappenbetätigungsmechanik 9, wie in Fig. 6 gezeigt.

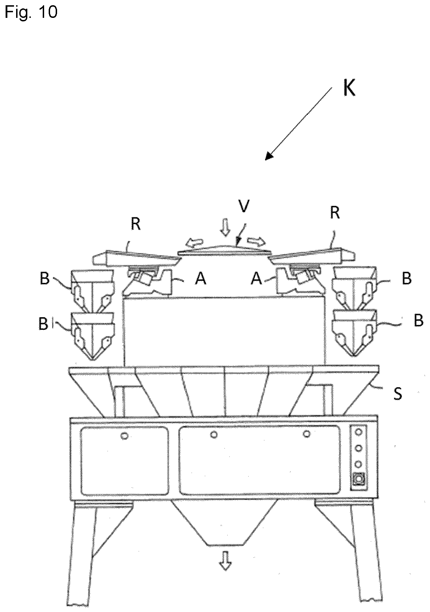

Fig. 10 zeigt eine Detailansicht einer Kombinationswaage K.
Von einem Verteilteller V können zu wiegende Materialien auf Dosierrinnen R verteilt werden. Diese werden von einem Antrieb A jeweils angetrieben. Zu wiegendes Material fällt von dort aus in einen ersten Behälter B (dieser dient in der vorliegenden Ausführungsform als Vorratsbehälter) und von dort in einen darunter angeordneten Behälter B (dieser dient in der vorliegenden Ausführungsform als Wägebehälter). Von dort aus kann das zu wiegende Material in eine Sammeleinrichtung S, hier als Trichter ausgestaltet, fallen.

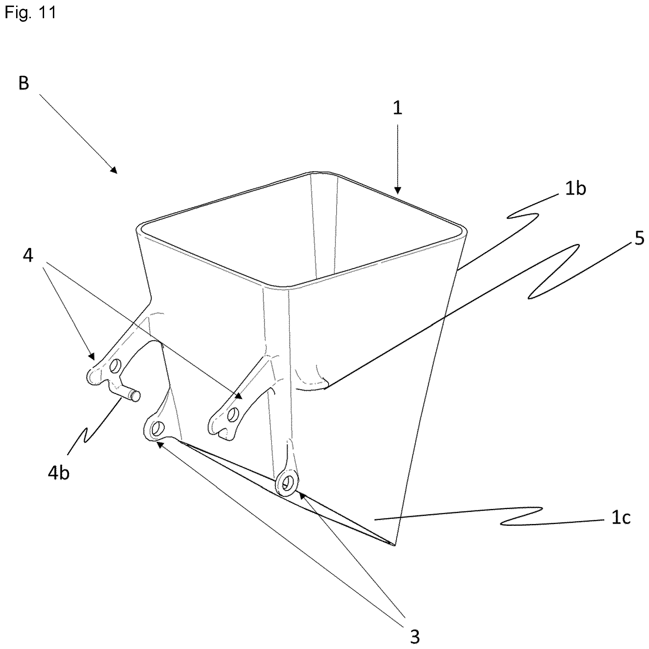

In Fig. 11 ist eine Zarge 1 eines Behälters B gemäß einer zweiten Ausführungsform gezeigt. Die Behälterzarge ist aus Feinguss ausgestaltet, ein oberer Teil (schachtförmiger Abschnitt 1b) ist quadratisch bzw. würfelförmig, ein unterer Teil (an Klappenform angepasster Abschnitt 1c) ist prismaförmig mit einem spitz zulaufenden Teil geformt. An der Außenseite der Zarge 1 sind auf einer Seite Klappenbefestigungsvorrichtungen 3 vorgesehen, an welchen eine Klappe (hier nicht gezeigt) angebracht werden kann. Hier ist also nur eine Klappe vorgesehen. Ferner sind zwei Aufhängevorrichtungen 4 vorgesehen. Eine Aufhängevorrichtung 4 weist einen zylindrischen Abschnitt 4b auf (an welchem beispielsweise ein Rückstellfeder - hier nicht gezeigt - befestigt werden kann).

Die vorliegende Erfindung ist nicht auf die oben genannten speziellen Ausführungsformen beschränkt. Außer den bereits beschriebenen Abschnitten können noch weitere Abschnitte integral mit der Zarge ausgebildet sein. Die Kombinationswaage kann auch andere Ausführungsformen haben.

Die folgenden Punkte gehren zur Offenbarung der vorliegenden Erfindung:
1. Behälter (B) aufweisend eine Zarge (1),
   wobei die Zarge (1) aus einem metallischen Werkstoff gefertigt ist,
   wobei die Zarge (1) keine Schweißnähte aufweist.
2. Behälter (B) gemäß Punkt 1, wobei die Zarge (1) aus einem duktilen metallischen Werkstoff gefertigt ist.
3. Behälter (B) gemäß Punkt 1 oder 2, wobei die Zarge (1) aus Edelstahl gefertigt ist.
4. Behälter (B) gemäß einem der vorherigen Punkte, wobei die Zarge (1) durch ein urformendes Verfahren, vorzugsweise ein Gussverfahren, weiter vorzugsweise ein Feingussverfahren hergestellt ist.
5. Behälter (B) gemäß einem der vorherigen Punkte, wobei die Zarge (1) einen schachtförmigen Abschnitt (1b) aufweist.
6. Behälter (B) gemäß Punkt 5, welcher ferner einen an die Klappenform angepassten Abschnitt (1c) aufweist, welcher an den schachtförmigen Abschnitt (1b) angesetzt ist, wobei der an die Klappenform angepasste Abschnitt (1c) vorzugsweise schräg zulaufend ist.
7. Behälter (B) gemäß einem der vorherigen Punkte, wobei die Zarge (1) einstückig ausgebildet ist.
8. Behälter (B) gemäß einem der vorherigen Punkte, wobei die Wanddicke der Zarge (1) im Bereich zwischen 0,3 und 5 mm, vorzugsweise 1 und 2,5 mm liegt.
9. Behälter (B) gemäß einem der vorherigen Punkte, wobei Mittenrauwert der Zargenoberfläche höchstens 0,8 µm beträgt.
10. Behälter (B) gemäß einem der vorherigen Punkte, wobei auf der Innenseite (1a) der Zarge (1) eine Oberflächenstrukturierung (2) vorgesehen ist.
11. Behälter (B) gemäß Punkt 10, wobei die Oberflächenstrukturierung rautenförmig ist.
12. Behälter (B) gemäß einem der vorherigen Punkte, wobei auf der Außenseite der Zarge (1) mindestens eine Klappenbefestigungsvorrichtung (3) vorgesehen sind.
13. Behälter (B) gemäß einem der vorherigen Punkte, wobei auf der Außenseite der Zarge (1) mindestens vier Klappenbefestigungsvorrichtungen (3) vorgesehen sind.
14. Behälter (B) gemäß einem der Punkte 12 und 13, wobei die Klappenbefestigungsvorrichtungen (3) einen von der Zarge (1) vorstehenden Abschnitt aufweisen, welcher jeweils eine Schnittstelle (3a) aufweist.
15. Behälter (B) gemäß einem der Punkte 12 bis 14 sofern auf Anspruch 5 rückbezogen, wobei die Klappenbefestigungsvorrichtungen (3) am Übergang des schachtförmigen Abschnitts (1b) zu einem spitzwinkligen Abschnitt (1c) vorgesehen sind.
16. Behälter (B)gemäß einem der Punkte 1 bis 15, wobei die Zarge (1) mindestens eine Aufhängevorrichtung (4) aufweist.
17. Behälter (B) gemäß Punkt 16, wobei die Zarge (1) zwei Aufhängevorrichtungen (4) aufweist.
18. Behälter (B) gemäß einem der Punkte 16 oder 17, wobei die Aufhängevorrichtung(en) (4) jeweils eine Lagerstelle (4a) aufweist (en).
19. Behälter (B) gemäß einem der Punkte 16 bis 18, wobei mindestens eine Aufhängevorrichtung (4) einen zylinderförmigen Abschnitt (4b) aufweist.
20. Behälter (B) gemäß einem der Punkte 12 bis 19, wobei die Übergänge zwischen der Außenseite der Zarge (1) und den Klappenbefestigungsvorrichtungen (3) einen Radius von mindestens 6,5 mm aufweisen.
21. Behälter (B) gemäß einem der Punkte 16 bis 19, wobei die Übergänge zwischen der Außenseite der Zarge (1) und der/den Aufhängevorrichtung(en) (4) einen Radius von mindestens 6,5 mm aufweisen.
22. Behälter (B) gemäß einem der vorhergehenden Punkte,
   ferner aufweisend: mindestens eine Klappe (6, 7), welche dazu angepasst sind, die untere Öffnung des Behälters (B) zu verschließen,
   wobei die mindestens eine Klappe (6, 7) an mindestens einer, vorzugsweise jeweils zwei Klappenbefestigungsvorrichtung(en) (3) schwenkbar gelagert sind,
   und eine Klappe (6, 7) mit einer Klappenbetätigungsmechanik (9) mit einer Drehwelle (10) verbunden ist,
   wobei die Drehwelle (10) in den Lagerstellen (4a) der Aufhängevorrichtungen (4) gelagert ist,
   wobei vorzugsweise zwei Klappen (6, 7) vorgesehen sind, die mit einem Verbindungselement (8) miteinander verbunden sind.
23. Behälter (B) gemäß Punkt 22 sofern auf Punkt 6 rückbezogen, wobei die Klappe(n) (6, 7) an die Teile des an die Klappenform angepassten Abschnitt (1c) anliegt /anliegen.
24. Behälter (B) gemäß einem der Punkte 22 oder 23, wobei die Bewegung der Klappenbetätigungsmechanik (9) nach oben durch einen Begrenzungsabschnitt (5) begrenzt wird, welcher integral mit der Zarge (1) ausgebildet ist.
25. Behälter (B) gemäß einem der Punkte 22 bis 24, wobei die Zarge (1) in dem Bereich, wo die Aufhängevorrichtungen (4) vorgesehen sind, eine größere Wanddicke aufweist als in anderen Bereichen.
26. Kombinationswaage (K), aufweisend,
   mehrere Wägebehälter (B) und optional Vorratsbehälter (B) gemäß einem der vorhergehenden Ansprüche,
   sowie eine Sammeleinrichtung (S), die dazu angepasst ist, Produkte aus den Wägebehältern (B) zusammenzuführen,
   wobei die Wägebehälter (B) dazu angepasst sind, ein Gewichtssignal über die Zeit aufzunehmen.
27. Kombinationswaage (K) gemäß Punkt 26, ferner aufweisend,
   einen Verteilteller (V) sowie mehrere Dosierrinnen (R), welche jeweils mit einem Antrieb (A) versehen sind, welche oberhalb der Wägebehälter (B) vorgesehen sind.
28. Verfahren zur Herstellung einer Zarge (1) eines Behälters (B), umfassend die folgenden Schritte:
   a) Bereitstellen einer äußeren Gussform (F), welche die äußere Oberfläche der Zarge (1) abbildet;
   b) Bereitstellen eines Gusskerns (T), welcher dazu angepasst ist, die innere Oberfläche der Zarge (1) abzubilden;
   c) Anordnen des Gusskerns (T) in der äußeren Gussform (F);
   d) Füllen der äußeren Gussform (F) mit Material.
29. Verfahren gemäß Punkt 28,
   wobei am Gusskern (T) zumindest teilweise eine Oberflächenstruktur (2) vorgesehen ist.

### BEZUGSZEICHENLISTE

- B: Behälter
- 1: Zarge
- 1a: Innenseite
- 1b: Schachtförmiger Abschnitt
- 1c: an Klappenform angepasster Abschnitt / schräg zulaufender Abschnitt
- 2: Struktur
- 3: Klappenbefestigungsvorrichtung
- 3a: Schnittstelle / Bohrung
- 4: Aufhängevorrichtung
- 4a: Lagerstelle / Bohrung
- 4b: zylindrischer Abschnitt
- 5: Begrenzungsabschnitt
- 6: erste Klappe
- 7: zweite Klappe
- 8: Verbindungselement
- 9: Klappenbetätigungsmechanik
- 10: Drehwelle

- K: Kombinationswaage
- V: Verteilteller
- A: Antrieb
- R: Dosierrinne
- S: Sammeltrichter

- H: Haltevorrichtung
- D: Feder

- F: äußere Gussform
- T: Gusskern

## Patentansprüche

1. Behälter (B), aufweisend eine Zarge (1),
wobei die Zarge (1) aus einem metallischen Werkstoff gefertigt ist,
wobei die Zarge (1) keine Schweißnähte aufweist.

2. Behälter (B) gemäß Anspruch 1, wobei die Zarge (1) aus Edelstahl gefertigt ist.

3. Behälter (B) gemäß einem der vorherigen Ansprüche, wobei die Zarge (1) durch ein urformendes Verfahren, vorzugsweise ein Gussverfahren, weiter vorzugsweise ein Feingussverfahren hergestellt ist.

4. Behälter (B) gemäß einem der vorherigen Ansprüche, wobei die Zarge (1) einen schachtförmigen Abschnitt (1b) aufweist.

5. Behälter (B) gemäß Anspruch 4, welcher ferner einen an die Klappenform angepassten Abschnitt (1c) aufweist, welcher an den schachtförmigen Abschnitt (1b) angesetzt ist.

6. Behälter (B) gemäß einem der vorherigen Ansprüche, wobei die Zarge (1) einstückig ausgebildet ist.

7. Behälter (B) gemäß einem der vorherigen Ansprüche, wobei auf der Innenseite (1a) der Zarge (1) eine Oberflächenstrukturierung (2) vorgesehen ist.

8. Behälter (B) gemäß einem der vorherigen Ansprüche, wobei auf der Außenseite der Zarge (1) mindestens eine Klappenbefestigungsvorrichtung (3) vorgesehen ist.

9. Behälter (B) gemäß einem der Ansprüche 1 bis 8, wobei die Zarge (1) mindestens eine Aufhängevorrichtung (4) aufweist.

10. Behälter (B) gemäß der Ansprüche 8 und 9,
ferner aufweisend: mindesten eine Klappe (6, 7), welche dazu angepasst ist, die untere Öffnung des Behälters (B) zu verschließen,
wobei die mindestens eine Klappe (6, 7) an mindestens einer, vorzugsweise jeweils zwei der Klappenbefestigungsvorrichtung(en) (3) schwenkbar gelagert sind,
und eine Klappe (6, 7) mit einer Klappenbetätigungsmechanik (9) mit einer Drehwelle (10) verbunden ist,
wobei die Drehwelle (10) in dafür vorgesehenen Lagerstellen (4a) der Aufhängevorrichtungen (4) gelagert ist,
wobei vorzugsweise zwei Klappen (6, 7) vorgesehen sind, die mit einem Verbindungselement (8) miteinander verbunden sind.

11. Behälter (B) gemäß Anspruch 10, wobei die Bewegung der Klappenbetätigungsmechanik (9) durch einen Begrenzungsabschnitt (5) begrenzt wird, welcher integral mit der Zarge (1) ausgebildet ist.

12. Kombinationswaage (K), aufweisend,
mehrere Wägebehälter (B) und optional Vorratsbehälter (B) gemäß einem der vorhergehenden Ansprüche,
sowie eine Sammeleinrichtung (S), die dazu angepasst ist, Produkte aus den Wägebehältern (B) zusammenzuführen,
wobei die Wägebehälter (B) dazu angepasst sind, ein Gewichtssignal über die Zeit aufzunehmen.

13. Kombinationswaage (K) gemäß Anspruch 12, ferner aufweisend,
einen Verteilteller (V) sowie mehrere Dosierrinnen (R), welche jeweils mit einem Antrieb (A) versehen sind, welche oberhalb der Wägebehälter (B) vorgesehen sind.

14. Verfahren zur Herstellung einer Zarge (1) eines Behälters (B), umfassend die folgenden Schritte:
a) Bereitstellen einer äußeren Gussform (F), welche die äußere Oberfläche der Zarge (1) abbildet;
b) Bereitstellen eines Gusskerns (T), welcher dazu angepasst ist, die innere Oberfläche der Zarge (1) abzubilden;
c) Anordnen des Gusskerns (T) in der äußeren Gussform (F);
d) Füllen der äußeren Gussform (F) mit Material.

15. Verfahren gemäß Anspruch 14,
wobei am Gusskern (T) zumindest teilweise eine Oberflächenstruktur (2) vorgesehen ist.

## Geänderte Patentansprüche

### Geänderte Patentansprüche gemäss Regel 137(2) EPÜ.

1. Behälter (B), aufweisend eine Zarge (1),
wobei die Zarge (1) aus einem metallischen Werkstoff gefertigt ist,
**dadurch gekennzeichnet, dass** die Zarge (1) keine Schweißnähte aufweist.

2. Behälter (B) gemäß Anspruch 1, wobei die Zarge (1) aus Edelstahl gefertigt ist.

3. Behälter (B) gemäß einem der vorherigen Ansprüche, wobei die Zarge (1) durch ein urformendes Verfahren, vorzugsweise ein Gussverfahren, weiter vorzugsweise ein Feingussverfahren hergestellt ist.

4. Behälter (B) gemäß einem der vorherigen Ansprüche, wobei die Zarge (1) einen schachtförmigen Abschnitt (1b) aufweist.

5. Behälter (B) gemäß Anspruch 4, welcher ferner einen an die Klappenform angepassten Abschnitt (1c) aufweist, welcher an den schachtförmigen Abschnitt (1b) angesetzt ist.

6. Behälter (B) gemäß einem der vorherigen Ansprüche, wobei die Zarge (1) einstückig ausgebildet ist.

7. Behälter (B) gemäß einem der vorherigen Ansprüche, wobei auf der Innenseite (1a) der Zarge (1) eine Oberflächenstrukturierung (2) vorgesehen ist.

8. Behälter (B) gemäß einem der vorherigen Ansprüche, wobei auf der Außenseite der Zarge (1) mindestens eine Klappenbefestigungsvorrichtung (3) vorgesehen ist.

9. Behälter (B) gemäß einem der Ansprüche 1 bis 8, wobei die Zarge (1) mindestens eine Aufhängevorrichtung (4) aufweist.

10. Behälter (B) gemäß der Ansprüche 8 und 9,
ferner aufweisend: mindesten eine Klappe (6, 7), welche dazu angepasst ist, die untere Öffnung des Behälters (B) zu verschließen,
wobei die mindestens eine Klappe (6, 7) an mindestens einer, vorzugsweise jeweils zwei der Klappenbefestigungsvorrichtung(en) (3) schwenkbar gelagert sind,
und eine Klappe (6, 7) mit einer Klappenbetätigungsmechanik (9) mit einer Drehwelle (10) verbunden ist,
wobei die Drehwelle (10) in dafür vorgesehenen Lagerstellen (4a) der Aufhängevorrichtungen (4) gelagert ist,
wobei vorzugsweise zwei Klappen (6, 7) vorgesehen sind, die mit einem Verbindungselement (8) miteinander verbunden sind.

11. Behälter (B) gemäß Anspruch 10, wobei die Bewegung der Klappenbetätigungsmechanik (9) durch einen Begrenzungsabschnitt (5) begrenzt wird, welcher integral mit der Zarge (1) ausgebildet ist.

12. Kombinationswaage (K), aufweisend,
mehrere Wägebehälter (B) und optional Vorratsbehälter (B) gemäß einem der vorhergehenden Ansprüche,
sowie eine Sammeleinrichtung (S), die dazu angepasst ist, Produkte aus den Wägebehältern (B) zusammenzuführen,
wobei die Wägebehälter (B) dazu angepasst sind, ein Gewichtssignal über die Zeit aufzunehmen.

13. Kombinationswaage (K) gemäß Anspruch 12, ferner aufweisend,
einen Verteilteller (V) sowie mehrere Dosierrinnen (R), welche jeweils mit einem Antrieb (A) versehen sind, welche oberhalb der Wägebehälter (B) vorgesehen sind.

14. Verfahren zur Herstellung einer Zarge (1) eines Behälters (B), umfassend die folgenden Schritte:
a) Bereitstellen einer äußeren Gussform (F), welche die äußere Oberfläche der Zarge (1) abbildet;
b) Bereitstellen eines Gusskerns (T), welcher dazu angepasst ist, die innere Oberfläche der Zarge (1) abzubilden;
c) Anordnen des Gusskerns (T) in der äußeren Gussform (F);
d) Füllen der äußeren Gussform (F) mit Material.

15. Verfahren gemäß Anspruch 14,
wobei am Gusskern (T) zumindest teilweise eine Oberflächenstruktur (2) vorgesehen ist.
